# EUROPÄISCHE PATENTANMELDUNG

(11) **EP 2 429 067 A1**
(43) Veröffentlichungstag der Anmeldung: **14.03.2012**
(21) Anmeldenummer: 10175897.7
(22) Anmeldetag: 09.09.2010
(51) Int. Cl.: H02K 9/22, H02K 5/10

(54) **"Rotor für einen Elektro-Außenläufermotor sowie Außenläufermotor"**

(71) Anmelder: ebm-papst Mulfingen GmbH & Co. KG, 74673 Mulfingen (DE)
(72) Erfinder: MÜLLER, Werner, 74673, Mulfingen-Seidelklingen (DE); BEST, Dieter, 74653, Ingelfingen (DE)
(74) Vertreter: Patentanwälte Dr. Solf & Zapf

(57) **Zusammenfassung**

Die vorliegende Erfindung betrifft einen Rotor (1) für einen Elektro-Außenläufermotor, bestehend aus einer Rotorglocke (2) mit einer Umfangswandung (4) und mindestens einem einseitigen Rotorboden (6) zum Umschließen eines Stators insbesondere als Teil eines Motorgehäuses hoher IP-Schutzart von beispielsweise IP54 nach DIN/IEC-EN 60034-Teil 5. Die Rotorglocke (2) weist einen den Rotorboden (6) durchgreifenden Kühlkörper (12) mit hoher Wärmeleitfähigkeit derart auf, dass innenseitig entstehende Motorwärme über den Kühlkörper (12) durch den Rotorboden (6) hindurch nach außen an die Umgebung abführbar ist. Weiterhin betrifft die Erfindung einen Elektro-Außenläufermotor insbesondere mit einem gekapselten Motorgehäuse hoher IP-Schutzart von beispielsweise IP54 nach DIN/IEC-EN 60034-Teil 5, bestehend aus einem Stator und einem den Stator umschließenden Rotor (1) in einer Ausgestaltung der oben beschriebenen Art.

## Beschreibung

Die vorliegende Erfindung betrifft zunächst gemäß dem Oberbegriff des Anspruchs 1 einen Rotor für einen Elektro-Außenläufermotor, bestehend aus einer Rotorglocke mit einer Umfangswandung und mindestens einem einseitigen Rotorboden zum Umschließen eines Stators insbesondere als Teil eines Motorgehäuses hoher IP-Schutzart von beispielsweise IP54 nach DIN/IEC-EN 60034-Teil 5.

Ferner betrifft die Erfindung auch gemäß dem Anspruch 14 einen Elektro-Außenläufermotor, bestehend aus einem Stator und einem den Stator umschließenden Rotor.

Das Dokument EP 1 419 568 B1 beschreibt einen "Elektromotor mit hoher IP-Schutzart", bei dem ein Motorgehäuse anteilig von dem topfförmigen Rotor (Außenläufer) gebildet ist. Ein zwischen dem rotierenden Außenläufer und dem übrigen, axial angrenzenden und u. a. eine Motorelektronik aufnehmenden, stationären (nicht drehenden) Teil des Motorgehäuses gebildeter Spalt ist über eine geeignete Rotationsdichtung, die insbesondere als Labyrinthdichtung ausgeführt ist, gegen Eindringen von Feuchtigkeit oder sonstigen Fremdstoffen von außen abgedichtet. Dadurch wird die angestrebte hohe IP-Schutzart gewährleistet. Wegen des dadurch praktisch geschlossenen bzw. gekapselten Motorgehäuses besteht das Problem, dass der Leistungsbereich durch die im Betrieb entstehende Motorwärme begrenzt ist. Deshalb beschreibt das genannte Dokument besondere Mittel zur inneren Kühlung durch innere Luftverwirbelung im inneren Bereich zwischen Stator und Rotor. Dazu weist der bekannte Motor einerseits axial zwischen dem Stator und einem dem Rotor gegenüberliegend angrenzenden Elektronikgehäuse ein inneres Lüfterrad (Kühlrad) sowie andererseits axial zwischen dem Stator und dem Rotorboden ein weiteres Kühlrad auf. Die Wirkung dieser mit dem Rotor rotierenden Kühlräder ist aber begrenzt, weil hiermit lediglich eine Luftumwälzung im umkapselten Innenraum des Motors mit dem Ziel erfolgt, dass erhitzte Luft intensiver an bestimmte mechanische Teile, wie eine Statorbuchse und/oder die Rotorglocke gelangen soll, über die dann die Wärme nach außen abgeführt werden soll. Diese Wärmeabfuhr ist allerdings zumindest im Falle der Rotorglocke nicht sonderlich effektiv, weil das üblicherweise verwendete Material (gezogener Stahl oder Kunststoff) eine schlechte Wärmeleitfähigkeit besitzt.

Der vorliegenden Erfindung liegt die Aufgabe zu Grunde, einen Außenläufermotor, und zwar insbesondere dessen Rotor, so zu verbessern, dass er durch eine effektivere Kühlung für einen noch höheren Leistungsbereich geeignet ist.

Erfindungsgemäß wird dies durch einen Rotor mit den Merkmalen des Anspruchs 1 erreicht. Vorteilhafte Ausgestaltungen und besondere Ausführungsvarianten sind in den abhängigen Ansprüchen enthalten. Ein Elektro-Außenläufermotor nach der Erfindung ist Gegenstand des Anspruchs 14.

Demnach ist erfindungsgemäß vorgesehen, dass die Rotorglocke einen derart im Bereich des Rotorbodens diesen durchgreifend angeordneten Kühlkörper mit hoher Wärmeleitfähigkeit aufweist, dass innenseitig entstehende Motorwärme über den Kühlkörper durch den Rotorboden hindurch nach außen an die Umgebung abführbar ist. Dieser Wärmetransport erfolgt somit weit überwiegend durch den Kühlkörper hindurch, so dass die Kühlung vom Material und der eigenen thermischen Leitfähigkeit der Rotorglocke weitgehend unabhängig ist. In bevorzugter Ausgestaltung durchgreift der Kühlkörper Öffnungen des Rotorbodens, wobei er einerseits innere, von dem Rotorboden nach innen in die Rotorglocke vorstehende Kühlflügel sowie andererseits äußere, nach außen vorstehende Kühlrippen aufweist. Zweckmäßig besteht hierbei der Kühlkörper aus Aluminium oder einem anderen geeigneten Alternativmaterial mit hoher thermischer Leitfähigkeit. Die in den Motor-Innenraum bis in die Nähe des Stators eintauchenden inneren Kühlflügel sorgen sowohl für eine intensive Luftumwälzung, als aber auch für eine effektive Wärmeabfuhr aufgrund der entsprechend großen Oberfläche, die als Wärmeaufnahmefläche wirkt. Innerhalb des gesamten Kühlkörpers besteht im Betrieb ein Temperaturgefälle, wodurch die Wärme durch den Kühlkörper hindurch von innen nach außen geführt und dort an die Umgebungsluft abgegeben wird. Die außen vorhandenen Kühlrippen vergrößern ebenfalls die Oberfläche, die dort als Wärmeabgabefläche wirkt.

In weiterer bevorzugter Ausgestaltung werden durch den Kühlkörper die für die Wärmeabfuhr von innen nach außen erforderlichen Öffnungen des Rotorbodens nach außen abgedichtet, so dass weiterhin - trotz der deutlich verbesserten Kühlung/Wärmeabfuhr - eine hohe IP-Schutzart gewährleistet werden kann.

Im Folgenden soll die Erfindung anhand der Zeichnung und darin veranschaulichter, besonderer Ausführungsbeispiele und Ausgestaltungsvarianten genauer beschrieben werden. Es zeigen:
- Fig. 1: eine perspektivische Explosionsansicht einer ersten Ausführung eines Rotors nach der Erfindung, und zwar mit Blickrichtung schräg auf die geschlossene Rotorseite,
- Fig. 2: eine Ansicht ähnlich Fig. 1, jedoch mit Blickrichtung auf die gegenüberliegende offene Rotorseite,
- Fig. 3: eine aufgeschnittene Perspektivansicht des montierten Rotors gemäß Fig. 1 und 2,
- Fig. 4-6: Darstellungen analog zu Fig. 1 bis 3 einer alternativen, zweiten Ausführungsform der Erfindung,
- Fig. 7-9: Darstellungen einer weiteren, dritten Alternative des Rotors, und zwar

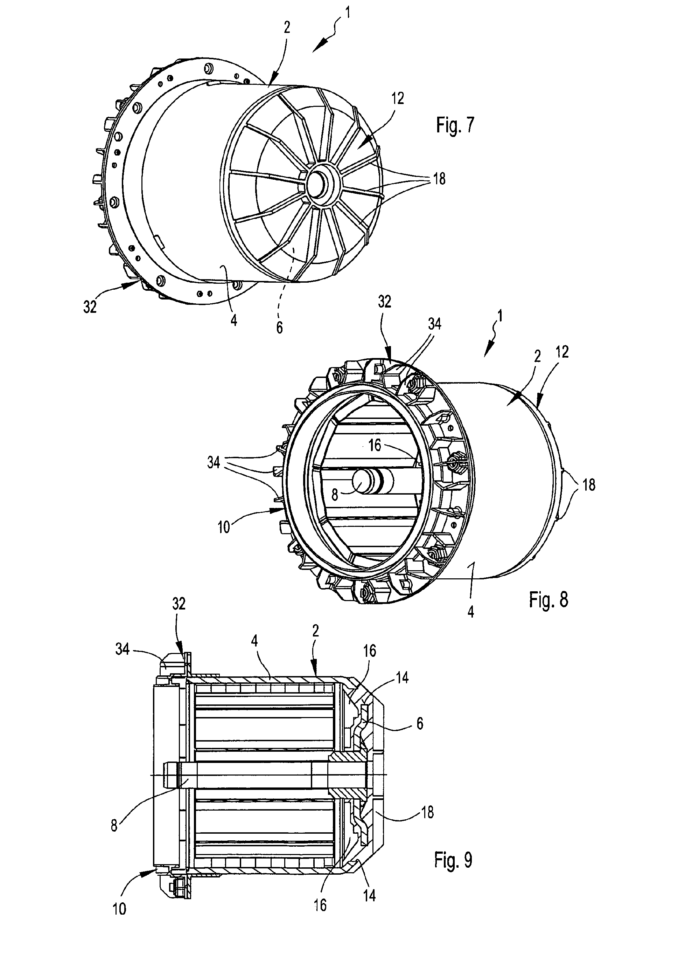

- Fig. 7: eine Perspektivansicht schräg auf die geschlossene Rotorseite,
- Fig. 8: eine Perspektivansicht auf die gegenüberliegende offene Rotorseite und
- Fig. 9: einen Axialschnitt des Rotors gemäß Fig. 7 und 8.

In den verschiedenen Figuren der Zeichnung sind gleiche Teile stets mit den gleichen Bezugszeichen versehen. Deshalb wird jedes Teil nur einmal beschrieben, wobei die Beschreibung analog auch für andere Zeichnungsfiguren gilt, in denen dieses Teil mit dem entsprechenden Bezugszeichen ebenfalls zu erkennen ist.

In den Zeichnungen ist von einem Elektro-Außenläufermotor nur ein erfindungsgemäßer Rotor 1 dargestellt, der aus einer topfförmigen Rotorglocke 2 mit einer Umfangswandung 4 und einem einseitigen, geschlossenen Rotorboden 6 besteht. Der Rotor 1 (Außenläufer) umschließt bei dem Elektro-Außenläufermotor in üblicher Weise einen nicht dargestellten Stator axial von einer Seite her als Teil eines Motorgehäuses. Hierbei ist der Rotor 1 über eine Rotorwelle 8 innerhalb des Stators drehbar gelagert. Ein zwischen dem rotierenden Rotor 1 und dem angrenzenden übrigen Motorgehäuse gebildeter Umfangsspalt ist über eine geeignete Rotationsdichtung 10, die insbesondere als Labyrinthdichtung ausgeführt ist, gegen Eindringen von Feuchtigkeit oder sonstigen Fremdstoffen von außen abgedichtet. Dadurch genügt der Motor einer hohen IP-Schutzart nach IEC 60034-5, beispielsweise IP54.

Wegen der geschlossenen, gekapselten Ausführung des Motorgehäuses und weil die Rotorglocke aus einem Material mit schlechter Wärme-Leitfähigkeit, insbesondere aus gezogenem Stahl oder Kunststoff, besteht, sind Mittel zum Abführen von innerer Wärme nach außen vorgesehen. Erfindungsgemäß weist die Rotorglocke 2 einen derart im Bereich des Rotorbodens 6 angeordneten Kühlkörper 12 mit hoher Wärmeleitfähigkeit auf, dass innenseitig entstehende Motorwärme über den Kühlkörper 12 durch den Rotorboden 6 hindurch nach außen an die Umgebung abführbar ist.

In bevorzugter Ausgestaltung durchgreift dazu der Kühlkörper 12 Öffnungen 14 des Rotorbodens 6, wobei der Kühlkörper 12 einerseits innere, vom Bereich des Rotorbodens 6 nach innen in die Rotorglocke 2 vorstehende Kühlflügel 16 sowie andererseits äußere, nach außen vorstehende Kühlrippen 18 aufweist. Die inneren Kühlflügel 16 können - wie dargestellt - mit radialem Verlauf axial vorstehend ausgebildet sein, sie können aber auch ein Profil nach Art eines Lüfterflügels aufweisen. Auch die äußeren Kühlrippen 18 sind bevorzugt radial ausgerichtet und stehen axial vom Kühlkörper 12 vor. Die Ausgestaltung und Anordnung der inneren Kühlflügel 16 und der äußeren Kühlrippen 18 ist jedoch grundsätzlich beliebig.

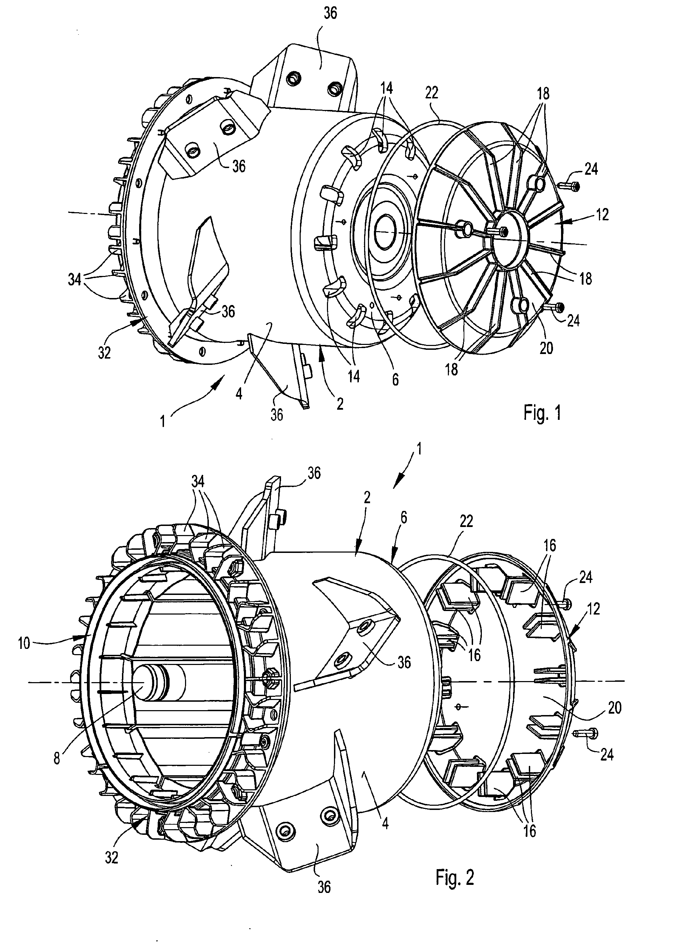

Was nun die erste Ausführungsform gemäß Fig. 1 bis 3 betrifft, so ist hierbei der Kühlkörper 12 als ein gesondertes Einzelteil, und zwar als einstückiges, scheibenartiges Kühlelement 20 ausgebildet. Dieses einteilige Kühlelement 20 weist einseitig die Kühlflügel 16 und anderseitig die Kühlrippen 18 auf. Hierbei ist das Kühlelement 20 außen deckelartig auf dem Rotorboden 6 befestigt, wobei die Kühlflügel 16 durch die Öffnungen 14 des Rotorbodens 6 hindurch in den Innenraum der Rotorglocke 2 hineinragen. Dazu sind die Kühlflügel 16 in Anpassung an die Größe und Anordnung der Öffnungen 14 so ausgebildet und in Gruppen angeordnet, dass sie in einer bestimmten Umfangsausrichtung des Kühlelementes 20 genau durch die Öffnungen 14 hindurch geführt werden können. Gemäß Fig. 2 können beispielsweise jeweils zwei Kühlflügel 16 eine Gruppe bilden, die gemeinsam durch je eine Öffnung 14 zu führen ist. Selbstverständlich können die Öffnungen 14 auch größer ausgebildet sein, so dass jeweils eine größere Anzahl von Kühlflügeln 16 als Gruppe einer der Öffnungen 14 zugeordnet sein können. Wesentlich ist, dass das Kühlelement 20 im montierten Zustand die Öffnungen 14 des Rotorbodens 6 nach außen dicht verschließt. Bevorzugt ist im dargestellten Beispiel zwischen dem Rotorboden 6 und dem Kühlelement 20 eine den Bereich der Öffnungen 14 gemeinsam umschließende Dichtung 22 angeordnet. Alternativ könnten aber auch Einzeldichtungen für jede einzelne Öffnung 14 vorgesehen sein.

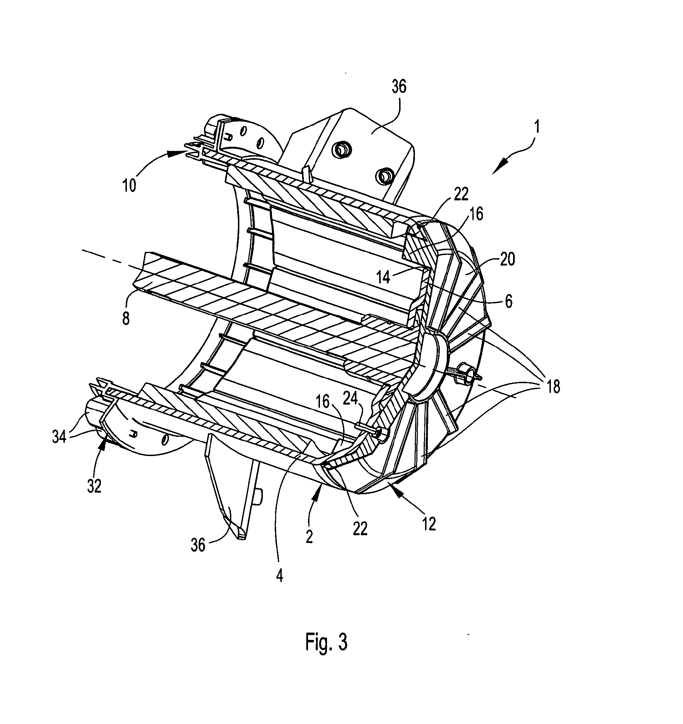

Die Befestigung des Kühlelementes 12 am Rotor 1 bzw. an der Rotorglocke 2 kann bevorzugt über Verschraubungen erfolgen, indem Schrauben 24 durch Montagelöcher des Kühlelementes 20 hindurch in Gewindebohrungen des Rotorbodens 6 eingeschraubt werden. Dazu wird besonders auf Fig. 3 verwiesen.

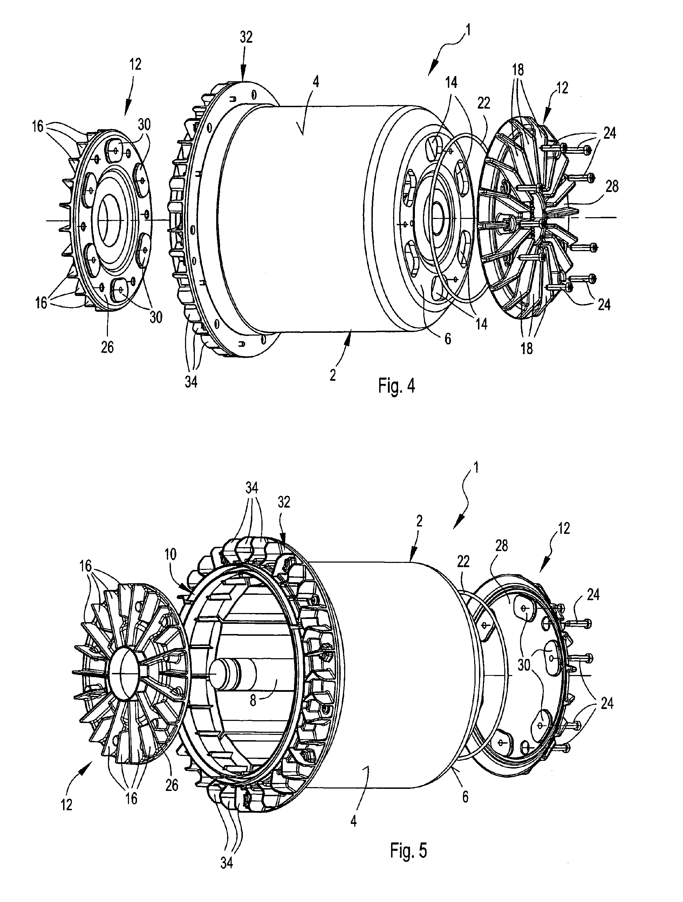

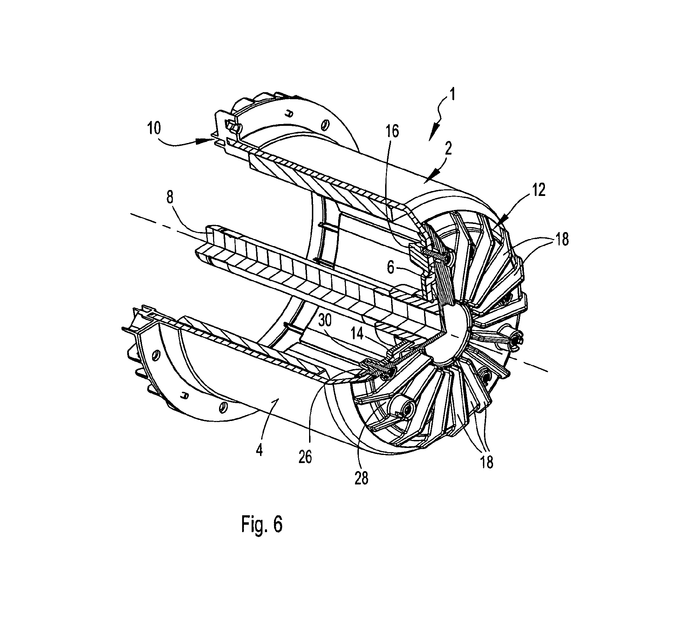

Bei der zweiten Ausführungsform gemäß Fig. 4 bis 6 ist der Kühlkörper 12 zweiteilig aus zwei gesonderten Einzelteilen ausgebildet, und zwar aus einem scheibenförmigen inneren, einseitig die Kühlflügel 16 aufweisenden Kühlelement 26 und einem scheibenförmigen äußeren, außenseitig die Kühlrippen 18 aufweisenden Kühlelement 28. Das innere Kühlelement 26 wird in die Rotorglocke 2 eingesetzt und auf der Innenseite des Rotorbodens 6 befestigt. Das äußere Kühlelement 28 wird - analog zu dem einteiligen Kühlelement 20 gemäß Fig. 1 bis 3 - außen auf dem Rotorboden 6 befestigt. Hierbei sind die beiden Kühlelemente 26, 28 im Bereich der Öffnungen 14 des Rotorbodens 6 über Wärmekontaktbereiche 30 wärmeleitend miteinander gekoppelt. Die Wärmekontaktbereiche 30 greifen in die Öffnungen 14 ein, so dass der Kühlkörper 12 insgesamt die Öffnungen 14 wärmeleitend durchgreift. Dazu wird insbesondere auf den Schnitt in Fig. 6 verwiesen. Um einen guten Wärmeübergang zu erreichen, haben die Wärmekontaktbereiche 30 jeweils möglichst große Oberflächen, die somit großflächig aneinander anliegen. Die Öffnungen 14 sind mit einer entsprechend angepassten Größe ausgebildet.

Auch bei dieser zweiten Ausführung gemäß Fig. 4 bis 6 ist eine entsprechende Abdichtung der Öffnungen 14 nach außen vorgesehen, wozu hier zwischen dem Rotorboden 6 und dem äußeren Kühlelement 28 eine entsprechende Dichtung 22 angeordnet ist. Zur Montage bzw. Befestigung sind das äußere Kühlelement 28 und das innere Kühlelement 26 unter sandwichartiger Zwischenlage des Rotorbodens 6 miteinander fest verbunden, insbesondere verschraubt. Dazu sind entsprechende Schrauben 24 insbesondere im Bereich der Wärmekontaktbereiche 30 angeordnet, um beim Verschrauben eine möglichst feste, gut wärmeleitende Anlage zu erreichen. Vorzugsweise können zusätzlich auch in den dazwischen liegenden Umfangsbereichen Verschraubungen vorgesehen sein.

Was schließlich die dritte Ausführungsform gemäß Fig. 7 bis 9 betrifft, so ist hierbei der Kühlkörper 12 im Bereich des Rotorbodens 6 unter Durchdringung der Öffnungen 14 angespritzt, wobei innen die Kühlflügel 16 und außen die Kühlrippen 18 formtechnisch gebildet sind. Somit ist hierbei der Kühlkörper 12 mit der Rotorglocke 2 bzw. dem Rotorboden 6 stoffschlüssig und/oder formschlüssig verbunden. Dazu wird vor allem auf den Schnitt in Fig. 9 verwiesen. Der angeformte, mit Vorteil z. B. aus Aluminium-Druckguss bestehende Kühlkörper 12 verschließt die Öffnungen 14 des Rotorbodens 6 durch die materialschlüssige Durchdringung, so dass auch ohne zusätzliche Dichtung(en) die IP-Schutz-Kapselung gewährleistet ist.

Für alle Ausführungsformen kann in weiterer vorteilhafter Ausgestaltung vorgesehen sein, dass die Rotorglocke 2 auf ihrer offenen, dem Rotorboden 6 und dem Kühlkörper 12 axial gegenüberliegenden Seite einen ringförmigen Kühlkörper 32 mit schaufelartigen, über den Umfang verteilt angeordneten Kühlflügeln 34 aufweist. Hierdurch wird auch in diesem Bereich die Wärmeabfuhr nach außen verbessert.

Zusätzlich oder alternativ zu dem Kühlkörper 32 kann auch ein nicht dargestelltes inneres Lüfterrad - im Sinne der eingangs erwähnten EP 1 419 568 B1 - so an einem verlängerten Ende der Rotorwelle 8 angeordnet werden, dass im fertig montierten Außenläufermotor dieses innere Lüfterrad in einem axial zwischen dem Stator und einer Motorelektronik liegenden Bereich rotierend angeordnet ist.

Weiterhin kann die Rotorglocke 2 in einer ebenfalls nicht zeichnerisch dargestellten Ausführung beidseitig jeweils einen Rotorboden aufweisen, beispielsweise so wie in der DE 296 12 395 U1 gezeigt. Dabei könnte wahlweise nur einer oder aber jeder der beiden Rotorböden einen Kühlkörper 32 in einer der zuvor beschriebenen Ausführungen aufweisen. Die beidseitig geschlossene Rotorglocke weist dann keine mitrotierende Rotorwelle auf, sondern sie wird auf oder an einer feststehenden Achse drehbar gelagert.

Der Vollständigkeit halber sei noch bemerkt, dass der erfindungsgemäße Rotor 1 bevorzugt für einen Lüfterantrieb eingesetzt wird. Dazu weist die Rotorglocke 2 außen auf der Umfangswandung 4 befestigte Haltelemente 36 für nicht dargestellte Lüfterflügel auf. Diese sind allerdings nur in Fig. 1 bis 3 dargestellt.

Für eine Ausführung, bei der es nicht auf einen besonderen IP-Schutz ankommt, kann der/jeder Rotorboden auch zusätzliche Öffnungen zur ergänzenden Kühlung aufweisen.

Auch wenn in den Zeichnungen nur der Rotor 1 dargestellt ist, so betrifft die Erfindung auch den ganzen Elektro-Außenläufermotor insbesondere mit einem gekapselten Motorgehäuse hoher IP-Schutzart von beispielsweise IP54, bestehend aus einem nicht dargestellten Stator und dem erfindungsgemäßen Rotor 1, der den Stator z. B. von einer Axial-Seite her als Teil des Motorgehäuses topfartig umschließt.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Rotor (1) für einen Elektro-Außenläufermotor, bestehend aus einer Rotorglocke (2) mit einer Umfangswandung (4) und mindestens einem einseitigen Rotorboden (6) zum Umschließen eines Stators insbesondere als Teil eines Motorgehäuses hoher IP-Schutzart von beispielsweise IP54 nach DIN/IEC-EN 60034-Teil 5,
**dadurch gekennzeichnet, dass** die Rotorglocke (2) einen den Rotorboden (6) durchgreifenden Kühlkörper (12) mit hoher Wärmeleitfähigkeit derart aufweist, dass innenseitig entstehende Motorwärme über den Kühlkörper (12) durch den Rotorboden (6) hindurch nach außen an die Umgebung abführbar ist.

2. Rotor nach Anspruch 1,
**dadurch gekennzeichnet, dass** der Kühlkörper (12) Öffnungen (14) des Rotorbodens (6) durchgreift und einerseits innere, von dem Rotorboden (6) nach innen in die Rotorglocke (2) vorstehende Kühlflügel (16) sowie andererseits äußere, nach außen vorstehende Kühlrippen (18) aufweist.

3. Rotor nach Anspruch 2,
**dadurch gekennzeichnet, dass** der Kühlkörper (12) als einstückiges, scheibenartiges Kühlelement (20) ausgebildet ist, das einseitig die Kühlflügel (16) und anderseitig die Kühlrippen (18) aufweist, und das außen deckelartig auf dem Rotorboden (6) befestigt ist, wobei die Kühlflügel (16) die Öffnungen (14) des Rotorbodens (6) durchgreifen.

4. Rotor nach Anspruch 3,
**dadurch gekennzeichnet, dass** das Kühlelement (20) die Öffnungen (14) des Rotorbodens (6) nach außen dicht verschließt, wozu bevorzugt zwischen dem Rotorboden (6) und dem Kühlelement (20) eine den Bereich der Öffnungen (14) umschließende Dichtung (22) angeordnet ist.

5. Rotor nach Anspruch 2,
**dadurch gekennzeichnet, dass** der Kühlkörper (12) zweiteilig aus einem inneren, einseitig die Kühlflügel (16) aufweisenden Kühlelement (26) und einem äußeren, außenseitig die Kühlrippen (18) aufweisenden Kühlelement (28) ausgebildet ist, wobei die zwei Kühlelemente (26, 28) im Bereich der Öffnungen (14) des Rotorbodens (6) über Wärmekontaktbereiche (30) wärmeleitend miteinander gekoppelt sind.

6. Rotor nach Anspruch 5,
**dadurch gekennzeichnet, dass** der Kühlkörper (12) die Öffnungen (14) des Rotorbodens (6) nach außen dicht verschließt, wozu bevorzugt zwischen dem Rotorboden (6) und dem äußeren Kühlelement (28) eine den Bereich der Öffnungen (14) umschließende Dichtung (22) angeordnet ist.

7. Rotor nach Anspruch 5 oder 6,
**dadurch gekennzeichnet, dass** das äußere Kühlelement (28) und das innere Kühlelement (26) unter Zwischenlage des Rotorbodens (6) miteinander fest verbunden, insbesondere verschraubt sind.

8. Rotor nach Anspruch 2,
**dadurch gekennzeichnet, dass** der Kühlkörper (12) im Bereich des Rotorbodens (6) unter Durchdringung der Öffnungen (14) angespritzt ist, wobei innen die Kühlflügel (16) und außen die Kühlrippen (18) formtechnisch gebildet sind.

9. Rotor nach Anspruch 8,
**dadurch gekennzeichnet, dass** der Kühlkörper (12) mit der Rotorglocke (2) bzw. dem Rotorboden (6) formschlüssig und/oder stoffschlüssig verbunden ist.

10. Rotor nach einem der Ansprüche 1 bis 9,
**dadurch gekennzeichnet, dass** die Rotorglocke (2) auf ihrer dem nur einseitigen Rotorboden (6) gegenüberliegenden, offenen Seite einen ringförmigen Kühlkörper (32) mit schaufelartigen, über den Umfang verteilt angeordneten Kühlflügeln (34) aufweist.

11. Rotor nach einem der Ansprüche 1 bis 10,
**dadurch gekennzeichnet, dass** die Rotorglocke (2) über den nur einseitig vorgesehenen Rotorboden (6) mit einer Rotorwelle (8) verbunden ist, die über Drehlager relativ zu einem Stator drehbar lagerbar ist, wobei vorzugsweise an einem verlängerten Wellenende ein inneres Lüfterrad so befestigt oder befestigbar ist, dass das innere Lüfterrad innerhalb des Motors zwischen dem Stator und einer Motor-Elektronik anzuordnen ist.

12. Rotor nach einem der Ansprüche 1 bis 9,
**dadurch gekennzeichnet, dass** die Rotorglocke (2) beidseitig jeweils einen Rotorboden aufweist, wobei wahlweise der eine und/oder andere Rotorboden einen Kühlkörper (12) entsprechend einem der vorhergehenden Ansprüche aufweist.

13. Rotor nach Anspruch 12,
**dadurch gekennzeichnet, dass** die Rotorglocke (2) über Drehlager an einer nicht-rotierenden Achse gelagert oder lagerbar ist.

14. Elektro-Außenläufermotor - insbesondere mit einem gekapselten Motorgehäuse hoher IP-Schutzart von beispielsweise IP54 nach DIN/IEC-EN 60034-Teil 5 - bestehend aus einem Stator und einem den Stator umschließenden Rotor (1) in einer Ausgestaltung nach einem der vorhergehenden Ansprüche.
